# EUROPEAN PATENT SPECIFICATION

(11) **EP 1 913 033 B1**
(45) Date of publication and mention of the grant of the patent: **08.09.2010**
(21) Application number: 06764195.1
(22) Date of filing: 18.07.2006
(51) Int. Cl.: C08F 10/00, C08F 10/08, C08F 2/04

(54) **POLYMERIZATION PROCESS FOR PREPARING POLYOLEFINS**
POLYMERISATIONSVERFAHREN ZUR HERSTELLUNG VON POLYOLEFINEN
PROCEDE DE POLYMERISATION UTILISE POUR PREPARER DES POLYOLEFINES

(30) Priority: 27.07.2005 EP 05106913; 29.07.2005 US 703577 P
(43) Date of publication of application: 23.04.2008
(73) Proprietor: Basell Poliolefine Italia S.r.l., 20124 Milano (IT)
(72) Inventor: BIGIAVI, Daniele, I-40137 Bologna (IT); PENZO, Giuseppe, I-46047 Montanara Di Curtatone (IT)
(74) Representative: Sacco, Marco
(86) International application number: PCT/EP2006/064346
(87) International publication number: WO 2007/014842

(56) References cited:
- WO-A-2004/000891
- WO-A-2004/000895
- WO-A-2005/058979
- US-A- 6 056 512

## Description

The present invention relates to a process comprising the polymerization in a solution phase of one or more α-olefins to obtain a polymeric solution, which is successively transferred to a section where the unreacted monomers are removed from the obtained polyolefin. In particular, the process of the invention exploits a screw pump for pressurizing and transferring the polymeric solution from the polymerization reactor to the section operating the removal of the unreacted monomers from the polyolefin.

It is known that when the polymerization of one or more olefins is carried out in a solution phase, a solution of a polyolefin in the reaction medium is withdrawn from the polymerization reactor. The reaction medium comprises the liquid monomers and optionally, depending on the α-olefin to be polymerized, an inert hydrocarbon solvent, which can be used to favor the solubility of the obtained polymer in the liquid medium. Highly viscous polymeric solutions are discharged from the polymerization reactor, the viscosity being generally comprised between 1000 and 100000 centiPoises.

When highly viscous fluids, such as the above polymeric solutions, have to be moved and processed, specific and suitable pumps are required. In particular, the stage involving the removal of the unreacted monomers and, optionally polymerization solvents, from the obtained polymeric solution is particularly severe, since it requires to be performed at high temperatures to foster the separation of the volatile components (unreacted monomers, solvents, etc.) from the polymeric solution. Moreover, the heating of the polymeric solution to the required high temperatures has to be performed in such a way to avoid the separation of a polymer melt excessively viscous which cannot be further processed and treated. To avoid this drawback, the polymeric solution is heated maintaining the pressure higher than its critical pressure, as described in the Patent Application WO 04/000891, which describes a process for removing the unreacted 1-butene from a solution of poly-1-butene in 1-butene. In order to provide the polymeric solution with the requested high values of pressure, volumetric pumps can be exploited. Among the volumetric pumps, screw pumps have shown to be highly efficient in transferring and pumping high amounts of polymeric solutions. Screw pumps are rotary, positive displacement pumps that can be endowed with one or more screws to transfer a liquid along an axis. Typically screw pumps have two or more intermeshing screws rotating axially clockwise or counterclockwise. Each screw thread is matched to carry a specific volume of fluid. Like gear pumps, screw pumps may include a driven screw with one or more rotating screws (lead screw). Fluid is transferred through successive contact between the housing and the screw flights from one thread to the next. Screw pumps provide a specific volume with each cycle and are also suitable to be used in metering applications.

The geometry of the single or multiple screws and the drive speed will affect the required pumping action. The capacity of screw pumps can be calculated based on the dimensions of the pump, the dimensions of the surface of the screws, and the rotational speed of the rotor, since a specific volume is transferred with each revolution. In applications where multiple rotors are used, the load is divided between a number of rotating screws. The casing acts as the stator when two or more rotors are used.

The combination of factors relating to the drive speed, flow, and the characteristics of the fluid transferred may affect the flow rate and volume fed through each cavity. Of course, a less viscous liquid will require a lower power compared to a highly viscous liquid, which requires a higher power to be transferred and pressurized. Generally, the required power depends on the viscosity of the transferred fluid and the head to be conferred. The efficiency of screw pumps requires that each rotor turns at a rate that allows each cavity to fill completely in order to work at full capacity. Furthermore, it is extremely important to avoid any partial reflow of liquid in a direction opposite to the desired one. Indicators of malfunction of a screw pump include: a decrease of the transferred flow rate, a decrease of the pump delivery pressure and a considerable increase of noise.

The above described structural design and operative capacity render screw pumps particularly suitable for pressurizing and transferring highly viscous solutions, such as the polymeric solutions. However, industrial polymerization plants are periodically forced to shutdown for several reasons, such as activity of maintenance of mechanical devices, the clogging of discharge lines, the cleaning of plant sections, and when another type of polymer is aimed to be prepared (campaign changes). As a consequence, the start-up of a polymerization plant can occur more times during a year, and the start-up conditions affect negatively the correct working of the screw pumps, especially when such volumetric pumps are used for transferring a polymeric solution between the polymerization section and the monomers recovery section. In fact, the shutdown of a polymerization plant implies the dilution by an inert solvent or a liquid monomer of all the plant equipment, reactor tanks and lines, so that at the successive start-up the screw pump works on volumes of liquid monomer and only when standard polymerization conditions are restored the pump transfers a flow of highly viscous polymeric solution.

The remarkable differences existing between the start-up conditions, in which the pumped liquid has a viscosity lower than 1 cP, and the standard polymerization conditions, in which the pumped liquid has a viscosity higher than 1000 cP, cause severe problems to the correct working of any screw pump. In particular, the start-up conditions are detrimental for the screw pump, since the running at a very low viscosity gives rise to typical phenomena of pump cavitation, especially when the pump has to provide the fluid with a high head. Irregular vibrations are therefore induced by the pump cavitation, so that the rotating screws impact each other and especially against the stator.

The friction between the rotating screws and the stator leads to mechanical wear of the rotating screws and the stator surface, so that the radial tolerance between the rotating screws and the stator surface is subjected to a slight increase. As a relevant consequence, whenever the polymerization plant is started-up the radial tolerance inside the screw pump is increased, so that the pumping capacity is considerably modified with respect to the original design. Even when standard polymerization conditions are re-established, the screw pump is now made unable to transfer and pressurize the required amount of polymeric solution and only lower amounts of polymeric solution can be pumped throughout the polymerization plant. Moreover, also during the polymerization run in standard conditions slight mechanical vibrations of the rotating pump are always present, and this contributes to worsen its mechanical wear, thus increasing the radial tolerance.

The Applicant has unexpectedly found that when an organo-aluminum compound is used as the catalyst activator in a solution polymerization of olefins and a screw pump is used for transferring the obtained polymeric solution, the above drawbacks caused by the increase of radial tolerance in the screw pump may be successfully overcome simply by adding the polymeric solution with little amounts of water at a feeding point upstream the screw pump.

It is therefore an object of the present invention a solution process for polymerizing one or more α-olefins of formula CH₂=CHR, where R is H or an alkyl radical C₁₋₁₂, to produce a polymer that is soluble in the reaction medium, the process comprising:
(a) polymerization in a solution phase of one or more α-olefins in the presence of an organo-aluminum compound and a catalyst system comprising a transition metal compound as the catalyst component to produce a polymeric solution ;
(b) the polymeric solution obtained from step a) is then pressurized and transferred by means of a screw pump to a successive step for removing the unreacted monomers from the polymer;
the process being **characterized in that** the polymeric solution is added with water at a feeding point upstream the pump, the molar ratio H₂O/Al being comprised between 0.5 and 8.0.

The operative conditions selected in the solution polymerization process according to the invention can successfully prevent the progressive increase of radial tolerance between rotating screw and stator in a screw pump used for transferring the polymeric solution from the polymerization section to the monomer recovery section.

In particular, the process of the invention requires carrying out the solution polymerization of olefins in the presence of a catalyst system comprising an organo-aluminum compound as the catalyst activator. This feature is important, because the performance of the pump, in term of flow rate and delivery pressure, is surprisingly maintained unaltered for a long time, likely due to the interaction between said organo-aluminum compound and the water introduced upstream the screw pump.

According to the invention, water is fed to the polymeric solution in an amount correlated to the moles of organo-aluminum compound contained in the polymeric solution. The molar ratio H₂O/Al should be comprised between 0.5 and 8.0, preferably between 1.0 and 4.0, where the moles of Al are the ones contained in the polymeric solution downstream the polymerization step a).

Without to be bound to any specific theory, it is believed that the reaction between the organo-aluminum compound deriving from the catalyst system and the water gives rise to the formation of species containing -Al(OH)- groups, which play a basic role in preserving the pumping capacity of the screw pump and in preventing the increase of radial tolerance caused by the mechanical wear. Once formed, species containing -Al(OH)- groups flow together with the polymeric solution inside the screw pump and have a high tendency to precipitate on the rotor and stator surfaces of the screw pump, thus forming a thin superficial layer, which has the effect of reducing the radial tolerance between the rotating screws and the stator. This contributes to re-establish and maintain substantially unaltered the original radial tolerance of the screw pump.

The comparative examples as enclosed in the experimental part of the present Application demonstrate that without the feeding of H₂O upstream the screw pump, and consequently without the formation of compounds containing -Al(OH)- groups and successive their precipitation, the radial tolerance between rotor and stator is increased after few weeks with a considerable reduction of flow rate and delivery pressure given by the screw pump.

The polymerization process of the invention will be now described with a specific reference to the solution polymerization of 1-butene or propylene as the main monomer.

The catalyst system used in the polymerization step (a) can be a Ziegler-Natta catalyst system and/or a single-site catalyst system comprising an alumoxane compound as cocatalyst which may substitute the organo-aluminum compound of step (a). The solution polymerization of step a) can be performed in one or more continuously stirred tank reactors or static mixer reactors (SMR). A solution of a polyolefin in the reaction medium is obtained from the polymerization reactor. The reaction medium comprises the liquid monomers and optionally, depending on the α-olefin to be polymerized, an inert hydrocarbon solvent, which can be used to favor the solubility of the obtained polymer in the liquid medium.

When the alpha-olefin to be polymerized is 1-butene, step (a) is carried out in the liquid monomer, optionally with the presence of an inert hydrocarbon solvent. A polymerization in liquid 1-butene is the preferred one, without using any inert hydrocarbon solvent. The bulk polymerization is feasible since poly-1-butene dissolves in 1-butene at relatively low temperatures. Furthermore, the two components of the solution perfectly mix together at the optimum working temperatures of a Ziegler-Natta or a single-site catalyst system. In order to obtain the best performance of the polymerization catalyst together with a complete miscibility of monomer and polymer, the polymerization temperature in step a) is generally kept at a value comprised in the range of from 65 to 85°C, while the pressure is generally comprised between 8 and 40 bar. The residence time of the liquid inside the reactor is generally comprised between 30 minutes and 4 hours, preferably between 2 and 3 hours. When the alpha-olefin to be polymerized is propylene, step (a) is carried out in liquid monomer, preferably with the presence of a polymerization medium selected from a paraffinic, isoparaffinic, naphtenic, or aromatic hydrocarbon solvent to foster the solubility of the obtained polypropylene. Suitable solvents are, for example, toluene, cyclohexane, hexane, heptane, octane, nonane, isooctane, ethylbenzene, isopentane and Isopar^{™}, which is a C₈-C₁₀ hydrocarbon mixture. Depending on the selected solvent and catalyst system, the polymerization of propylene is generally operated at a high temperature, generally in a range from 80 to 180°C, preferably from 90 to 130°, at a high pressure, generally in a range from 15 to 100 bar, preferably from 20 to 60 bar. The residence time of the liquid inside the reactor is generally comprised between 10 minutes and 90 minutes, preferably between 20 minutes and 60 minutes.

Different operative conditions can be adopted in step a) as regards the concentration of molecular weight regulator, monomer and optional comonomers. Hydrogen can be advantageously used to control the molecular weight of the obtained polymers.

Optionally the main monomer of step a) (1-butene or propylene) may be copolymerized with another α-olefin of formula CH₂=CHR, where R is hydrogen or a hydrocarbon radical having 1-8 carbon atoms in an amount up to 50% by weight, preferably 0.5-30% by weight, based on the main monomer. If the main monomer is propylene, the preferred comonomers are ethylene, 1-butene, 1-hexene and 1-octene. If the main monomer is 1-butene, the preferred comonomers are ethylene, propylene, 1-hexene and 1-octene.

A highly viscous polymeric solution is discharged from the polymerization reactor of step a). The viscosity of the obtained polymeric solution should not exceed a threshold value, as otherwise it becomes extremely difficult stirring and/or processing the polymeric solution downstream the polymerization section. The viscosity of the polymeric solution is generally comprised between 1000 and 100000 centiPoises.

According to step b) of the present invention, a screw pump is used for pressurizing and transferring the polymeric solution from step a) to a successive step for removing the unreacted monomers from the polymer. As explained, the feeding of H₂O upstream the pump hinders the decrease of the pumping capacity of the screw pump in term of flow rate and delivery pressure: H₂O reacts with the organo-aluminum compound deriving from the catalyst system and forms species containing -AI(OH)- groups as, for example, Al(OH)₃.

According to a preferred embodiment of the invention, aluminum alkyl compounds of formula AlR₃, where R=alkyl radical C₁-C₁₂, are used as the organo-aluminum compound in the polymerization step a). The preferred alkyl aluminum compounds are selected among the trialkyl aluminum compounds, such as for example triethylaluminum, triisobutylaluminum, tri-n-butylaluminum, tri-n-hexylaluminum, tri-n-octylaluminum. It is also possible the use of alkylaluminum halides, such as AlEt₂Cl, alkylaluminum hydrides or alkylaluminum sesquichlorides, optionally in mixture with said trialkyl aluminum compounds.

In the preferred case of an aluminum alkyl compound the following reaction may occur:

**(1)** **Al R₃+3H₂O → Al(OH)₃+ 3RH**

**wherein R=alkyl radical C₁-C₁₂**

For instance, in case of tri-ethyl aluminum, the following reaction may occur:

**(2)** **Al (C₂H₅)₃ + 3H₂O → Al(OH)₃+ 3C₂H₆**

The -Al(OH)- containing species, as the Al(OH)₃, partially precipitate on the rotor and stator surfaces of the screw pump, thus forming a thin layer which has the effect of reducing the radial tolerance between the rotating screws and the stator. The thickness of this layer is deemed to be substantially constant, in the sense that said superficial layer is continuously generated by the precipitation of the -Al(OH)- containing species and, at the same time, it is partially removed by the continuous slight vibrations of the rotating screw (dynamic equilibrium). This helps in maintaining substantially constant the pumping capacity of the screw pump for a long period of time.

The polymeric solution is transferred by means of the screw pump to the successive step of separation, where unreacted monomers and the polymerization solvents, if present, are recovered and re-circulated to the polymerization reactor of step a). According to the invention, the removal of the unreacted monomers and polymerization solvents is generally achieved by a melt devolatilization technique, which involves the recover of unreacted monomers, polymerization solvents and simultaneously the separation of the produced polyolefin in form of a "polymer melt". With the term "polymer melt" is meant an olefin polymer in the molten state: in spite of its very high viscosity (of about 20 x 10⁶ cP), said polymer melt is still able to be pumped by means of a gear pump.

In order to be efficiently carried out the melt devolatilization requires feeding the devolatilization chambers with a polymeric solution having high values of temperature. Therefore, the polymeric solution is first delivered by the screw pump at a delivery pressure higher than 40 bar, preferably from 50 to 100 bar, and then is heated in a heat exchanger to raise its temperature to values comprised between 150 and 300°C, this value of temperature being bound to the volatility of the specific monomers and solvents to be recovered. A multi-tube heat exchanger with static mixing elements inserted inside each tube can be used to this purpose, as described in the Patent Application WO 04/000891 in the name of the same Applicant.

After the above heating step, the polymeric solution can be introduced in one or more devolatilization chambers. Preferably, a sequence of a first and a second volatilizer operating at a decreasing pressure can be exploited. The first volatilizer can be operated at a pressure higher than the atmospheric pressure and the second one can be operated under vacuum: by this technique a polymer melt substantially free of monomers and polymerization solvents is obtained at the outlet of the second volatilizer.

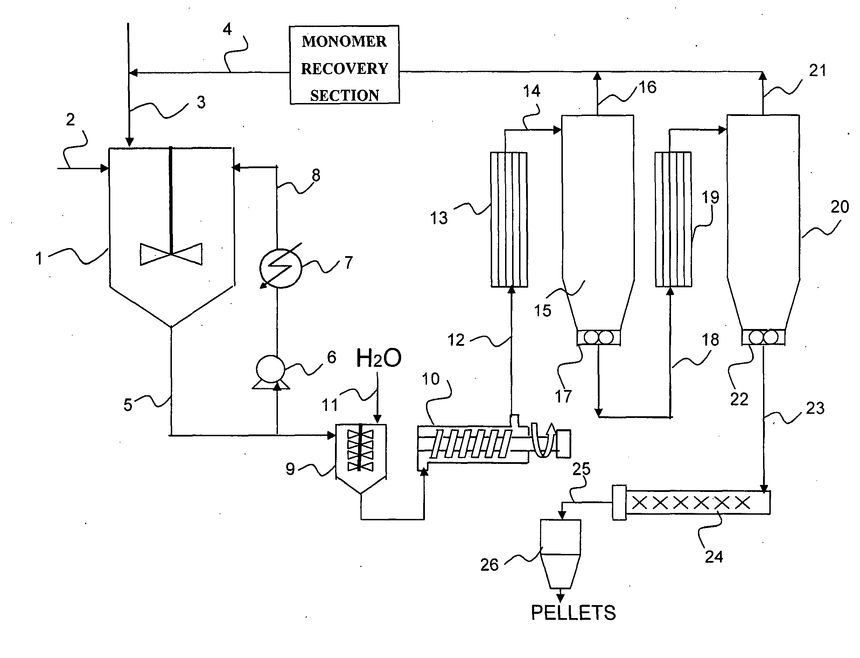

The process of the present invention will now be described in detail with reference to the process setup shown in Figure 1, referring in particular to a solution process for polymerizing 1-butene or propylene as the main monomer. The process setup of Fig. 1 has to be considered illustrative and not limitative of the scope of the present invention.

The solution polymerization step a) of the present invention is performed in a continuously stirred tank reactor 1. A transition metal compound, optionally supported on a carrier, an aluminum alkyl compound and optionally an electron donor compound are first pre-contacted in one or more pre-contacting pots (not shown) and then fed to the continuously stirred tank reactor 1 via line 2. A liquid stream containing liquid 1-butene or propylene, hydrogen, optional comonomers, optional hydrocarbon solvents is introduced into the reactor 1 via line 3. The monomers and optional solvents coming from the monomer recovery section are recycled to the reactor 1 via line 4.

The operating conditions in the polymerization reactor 1 are selected as above specified and a high-viscosity solution of a polyolefin in the liquid polymerization medium is discharged from the reactor 1 via line 5. A part of the polymeric solution is fed by a pump 6 to a heat exchanger 7 and then, after suitable cooling, continuously recycled via line 8 to the polymerization reactor 1.

The remaining part of polymeric solution discharged from the stirred tank reactor 1 is first mixed with water in the mixing pot 9 and successively is pressurized and transferred by means of the screw pump 10 to the step for removing the unreacted monomers and optional solvents from the obtained polyolefin. According to the present invention, a suitable amount of water is fed, upstream the screw pump 10, into the mixing pot 9 via line 11.

The polymeric solution is delivered by screw pump 10 at the requested delivery pressure at the inlet of the heat exchanger 13 via line 12. By the heat exchanger 13 the temperature of the polymeric solution is increased to high values for involving the separation of the unreacted monomers and polymerization solvents from the polymeric components in the successive devolatilization step. A multi-tube heat exchanger with static mixing elements inserted inside each tube may be used as the heat exchanger 13.

The polymeric stream exiting the top of the heat exchanger 13 is successively introduced via line 14 at the top of a first volatilizer 15, operated under pressure. In said first volatilizer 15, the unreacted monomers and optional solvents are separated from the polymeric components: the polymer melt settles downwards at the bottom of the volatilizer, while the unreacted monomers flow upward as a gaseous mixture. The gaseous mixture collected at the top of the volatilizer 15 is passed via line 16 to the monomer recovery section and then returned as liquid monomers to the polymerization reactor 1 via line 4.

The polymer melt is withdrawn by means of a gear pump 17 from the bottom of the first volatilizer 15 and introduced via line 18 into a second multi-tube heat exchanger 19. Afterwards, the polymer melt is fed at the top of a second volatilizer 20 wherein vacuum conditions are maintained. The gaseous mixture collected at the top of said second volatilizer 20 is sent via line 21 to the monomer recovery section. The polymer melt withdrawn by means of a gear pump 22 from the bottom of the second volatilizer 20 is introduced via line 23 into a static mixer 24 to be subjected to extrusion. A side-arm extruder (not shown) can be used for melting and mixing the additives used for the compounding of the obtained polyolefin. The additivated polyolefin exiting the static mixer 24 is then passed via line 25 to an underwater pelletizer 26 where it is cut into pellets.

As above indicated, the solution polymerization process of the invention can be carried out in the presence of a highly active Ziegler-Natta catalyst system comprising the catalyst obtained by the reaction of a transition metal compound of groups 4 to 10 of the Periodic Table of Elements (new notation) with an organo-aluminum compound. In particular, the transition metal compound can be selected among compounds of Ti, V, Zr, Cr, and Hf. Preferred compounds are those of formula Ti(OR)ₙX_{y-n} in which n is comprised between 0 and y; y is the valence of titanium; X is halogen and R is a hydrocarbon group having 1-10 carbon atoms or a COR group. Among them, particularly preferred are titanium compounds having at least one Ti-halogen bond, such as titanium tetrahalides or halogenalcoholates. Preferred specific titanium compounds are TiCl₃, TiCl₄, Ti(OBu)₄, Ti(OBu)Cl₃, Ti(OBu)₂Cl₂, Ti(OBu)₃Cl.

Particularly suitable high yield Ziegler-Natta catalysts are those wherein the titanium compound is supported on magnesium halide in active form which is preferably MgCl₂ in active form. The internal electron donor compounds can be selected among esters, ethers, amines, and ketones. In particular, the use of compounds belonging to 1,3-diethers, phthalates, benzoates and succinates is preferred.

Further improvements can be obtained by using, in addition to the electron-donor present in the solid component, an electron-donor (external) added to the aluminium alkyl co-catalyst component or to the polymerization reactor. These external electron donor can be the same as, or different from, the internal donor. Preferably they are selected from alkoxysilanes of formula Rₐ¹R_{b}²Si(OR³)_{c}, where a and b are integer from 0 to 2, c is an integer from 1 to 3 and the sum (a+b+c) is 4; R¹, R², and R³, are alkyl, cycloalkyl or aryl radicals with 1-18 carbon atoms. Particularly preferred are the silicon compounds in which a is 1, b is 1, c is 2, at least one of R¹ and R² is selected from branched alkyl, cycloalkyl or aryl groups with 3-10 carbon atoms and R³ is a C₁-C₁₀ alkyl group, in particular methyl. Examples of such preferred silicon compounds are methylcyclohexyldimethoxysilane, diphenyldimethoxysilane, methyl-t-butyldimethoxysilane, dicyclopentyldimethoxysilane. Moreover, are also preferred the silicon compounds in which a is 0, c is 3, R² is a branched alkyl or cycloalkyl group and R³ is methyl. Examples of such preferred silicon compounds are cyclohexyltrimethoxysilane, t-butyltrimethoxysilane and thexyltrimethoxysilane.

The solution polymerization process of the invention can be carried out also in the presence of a single-site catalyst system comprising:
- at least a transition metal compound containing at least one n bond;
- at least an alumoxane (which may also act as an organo-aluminum compound) or a compound able to form an alkylmetallocene cation.

A preferred class of metal compounds containing at least one n bond are metallocene compounds belonging to the following formula (I):

Cp(L)_{q}AMXₚ (I)

wherein
M is a transition metal belonging to group 4, 5 or to the lanthanide or actinide groups of the Periodic Table of the Elements; preferably M is zirconium, titanium or hafnium;
the substituents X, equal to or different from each other, are monoanionic sigma ligands selected from the group consisting of hydrogen, halogen, R⁶, OR⁶, OCOR⁶, SR⁶, NR⁶₂ and PR⁶₂, wherein R⁶ is a hydrocarbon radical containing from 1 to 40 carbon atoms; preferably, the substituents X are selected from the group consisting of -Cl, -Br, -Me, -Et, -n-Bu, -sec-Bu, - Ph, -Bz, -CH₂SiMe₃, -OEt, -OPr, -OBu, -OBz and -NMe₂;
p is an integer equal to the oxidation state of the metal M minus 2;
n is 0 or 1; when n is 0 the bridge L is not present;
L is a divalent hydrocarbon moiety containing from 1 to 40 carbon atoms, optionally containing up to 5 silicon atoms, bridging Cp and A, preferably L is a divalent group (ZR⁷₂)ₙ; Z being C, Si, and the R⁷ groups, equal to or different from each other, being hydrogen or a hydrocarbon radical containing from 1 to 40 carbon atoms;
more preferably L is selected from Si(CH₃)₂, SiPh₂, SiPhMe, SiMe(SiMe₃), CH₂, (CH₂)₂, (CH₂)₃ or C(CH₃)₂;
Cp is a substituted or unsubstituted cyclopentadienyl group, optionally condensed to one or more substituted or unsubstituted, saturated, unsaturated or aromatic rings;
A has the same meaning of Cp or it is a NR⁷, -O, S, moiety wherein R⁷ is a hydrocarbon radical containing from 1 to 40 carbon atoms;
Alumoxanes used in a metallocene catalyst system can be obtained by reacting, upstream the polymerization step, water with an organo-aluminium compound of formula HⱼAlU₃₋ⱼ or HⱼAl₂U₆₋ⱼ, where the U substituents, same or different, are hydrogen atoms, halogen atoms, C₁-C₂₀-alkyl, C₃-C₂₀-cyclalkyl, C₆-C₂₀-aryl, C₇-C₂₀-alkylaryl or C₇-C₂₀-arylalkyl radicals, optionally containing silicon or germanium atoms, with the proviso that at least one U is different from halogen, and j ranges from 0 to 1, being also a non-integer number. In this reaction the molar ratio of Al/water is preferably comprised between 1:1 and 100:1.

The alumoxanes are considered to be linear, branched or cyclic compounds containing at least one group of the type: 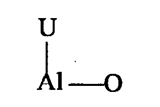 wherein the substituents U, same or different, are defined above.

In particular, alumoxanes of the formula: 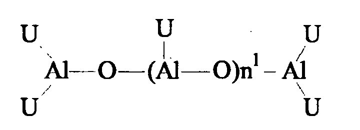 can be used in the case of linear compounds, wherein n¹ is 0 or an integer of from 1 to 40 and the substituents U are defined as above; or alumoxanes of the formula: 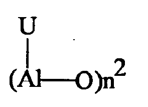 can be used in the case of cyclic compounds, wherein n² is an integer from 2 to 40 and the U substituents are defined as above.

Examples of suitable alumoxanes are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

The following examples will further illustrate the present invention without limiting its scope.

### EXAMPLES

The following examples relate to some polymerization tests carried out in an industrial plant for the solution polymerization of 1-butene.

The polymerization step a) was carried out in two continuously stirred tank reactors (CSTR) placed in series. It was used a Ziegler-Natta catalyst system comprising:
- a solid catalyst component based on a Titanium compound;
- triisobutylaluminum (TIBA) as a catalyst activator;
- thexyltrimethoxysilane as a donor compound for the stereoregularity control.

The above catalyst system was fed exclusively to the first reactor of the two CSTR type reactors in series.

### Preparation of the solid catalyst component

Into a 500 ml four-necked round flask, purged with nitrogen, 225 ml of TiCl₄ were introduced at 0°C. While stirring, 6.8 g of microspheroidal MgCl₂ 2.7C₂H₅OH (prepared as described in Ex. 2 of USP 4,399,054 but operating at 3,000 rpm instead of 10,000) were added. The flask was heated to 40°C and 4.4 mmoles of diisobutylphthalate were thereupon added. The temperature was raised to 100°C and maintained for two hours, then stirring was discontinued, the solid product was allowed to settle and the supernatant liquid was siphoned off.

200 ml of fresh TiCl₄ were added, the mixture was reacted at 120°C for one hour, then the supernatant liquid was siphoned off and the solid obtained was washed six times with anhydrous hexane (6 x 100 ml) at 60°C and then dried under vacuum. The catalyst component contained 2.8 wt% ofTi and 12.3 wt% of phthalate.

### Example 1

### - Step a)-

Liquid 1-butene together with H₂ as a molecular weight regulator was continuously fed to the polymerization reactors. The polymerization conditions in the first and second reactor are reported in Table 1, as well as the feeding ratio H₂/C₄H₈.

**TABLE 1**

| Polymerization conditions | -1^{st} Reactor | 2^{nd} Reactor |
|---|---|---|
| Temperature (°C) | 70 | 75 |
| Pressure (bar) | 20 | 20 |
| Residence Time (min) | 90 | 60 |
| H₂/C₄H₈ (ppm weight) | 3 | 60 |

A solution of polybutene in butene-1 having a polymer concentration of 25% by weight was discharged from the second polymerization reactor, said polybutene solution containing about 200 ppm by weight of tri-isobutylaluminum (TIBA) deriving from the catalyst system.

### - Step b) -

A screw pump was used for pressuring and transferring the polymeric solution from the polymerization section to a sequence of two devolatilization chambers according the process setup shown in Fig. 1.

The design parameters of the screw pump were such to provide a flow rate up to 30 t/h and a pressure gradient up to 50 bar. Accordingly, taking into account that the inlet pressure was 20 bar (polymerization pressure), the delivery pressure of the screw pump could be at the maximum of 70 bar. In order to have a good working of the heat exchanger 13 in Fig. 1 the operative parameters of the screw pump were kept close to its design parameters, so as it was able to deliver its nominal flowrate at 60 bar. 25 t/h of solution of polybutene in 1-butene containing about 5 Kg/h of TIBA (corresponding to 25 mol/h of Al) was treated according to the process of the invention: water was added to the polymeric solution at a point situated upstream the screw pump.

1.0 kg/h of H₂O (corresponding to 55.5 mol/h) were continuously pre-mixed with the polymeric solution, so as to satisfy a molar ratio H₂O/Al of about 2.2.

After a period of about 6 months, the screw pump provided substantially the same performance according the original design parameters, maintaining a flow rate of 25 t/h and a delivery pressure of 60 bar.

### Example 2 (Comparative)

25 t/h of the same solution ofpolybutene in 1-butene obtained from step a) in Example 1 was pressurized and transferred by means of the same screw pump used in Example 1, with the difference that water was not added to the polymeric solution at a point situated upstream the screw pump.

After a period of only 1 month the performance of the screw pump in term of flow rate and delivery pressure was seriously compromised: in fact, the screw pump was able to transfer only 15 t/h of polymeric solution with a decrease of the delivery pressure at a value of 40 bar instead of the required 60 bar. This reduction in the pump performance affected negatively the entire process of poly-1-butene production with a remarkable reduction of the amount of polybutene-1 melt discharged from the devolatilization section. Furthermore, a delivery pressure of only 40 bar at the inlet of the heat exchanger does not guarantee a correct working of the heat exchanger with the risk of having the separation of highly viscous polymer inside the heat exchanger.

### Example 3

The process of the invention was applied at the situation observed in the comparative Ex. 2 (decrease of pump performance after 1 month).

1.4 kg/h of H₂O (corresponding to 77.7 mol/h) were started to be pre-mixed with the polymeric solution, so as to satisfy a molar ratio H₂O/Al of about 3.

After few days a considerable increase in the pump performance was observed in term of flow rate and delivery pressure, so that the original operative parameters of the screw pump were restored (flow rate=25 t/h and delivery pressure of 60 bar).

Due to the feeding of water a layer of Al(OH)₃ is quickly formed on the rotor and stator surfaces of the screw pump: said inorganic layer has the effect of re-establishing the original radial tolerance inside the screw pump with the advantages described in the present patent application.

### Example 4 (Comparative)

25 t/h of the same solution of polybutene in 1-butene obtained from step a) in Example 1 was pressurized and transferred by means of the same screw pump used in Example 1, with the difference that, instead of water, ATMER163^{®} (mixture of alkyldiethanolamines of formula R-N (CH₂CH₂OH)₂, wherein R is an alkyl radical C₁₂-C₁₈) was added to the polymeric solution at a point situated upstream the screw pump.

50 mol of ATMER163^{®} were continuously pre-mixed with the polymeric solution, so as to satisfy a molar ratio ATMER163^{®}/Al of about 2.

After a period of only 1 month the performance of the screw pump in term of flow rate and delivery pressure was seriously compromised: in fact, the screw pump was able to transfer only 15 t/h of polymeric solution with a decrease of the delivery pressure at a value of 45 bar instead of the required 60 bar.

## Claims

1. A solution process for polymerizing one or more α-olefins of formula CH₂=CHR, where R is H or an alkyl radical C₁₋₁₂, to produce a polymer that is soluble in the reaction medium, the process comprising:
(a) polymerization in a solution phase of one or more α-olefins in the presence of an organo-aluminum compound and a catalyst system comprising a transition metal compound as the catalyst component to produce a polymeric solution;
(b) pressurizing and transferring, by means of a screw pump, the polymeric solution obtained from step a) to a successive step for removing the unreacted monomers from the polymer;
the process being **characterized in that** water is added to the polymeric solution at a feeding point upstream the pump, the molar ratio H₂O/Al being comprised between 0.5 and 8.0.

2. The process according to claim 1, wherein said molar ratio H₂O/Al is comprised between 1.0 and 4.0.

3. The process according to claims 1-2, wherein said catalyst system in step (a) is a Ziegler-Natta catalyst and/or a single-site catalyst.

4. The process according to any of claims 1-3, wherein the polymerization of step a) is performed in one or more continuously stirred tank reactors or static mixer reactors (SMR).

5. The process according to any of claims 1-4, wherein the α-olefin to be polymerized is 1-butene and the polymerization step (a) is carried out in the liquid monomer.

6. The process according to claim 5, wherein the solution polymerization of 1-butene is carried out at a temperature comprised in the range of from 65 to 85°C, while the pressure is comprised between 8 and 40 bar.

7. The process according to any of claims 1-4, wherein the α-olefin to be polymerized is propylene and the polymerization of step (a) is carried out in the presence of a polymerization medium selected from a paraffinic, isoparaffinic, naphtenic, or aromatic hydrocarbon solvent.

8. The process according to claim 7, wherein the solution polymerization of propylene is carried out at a temperature comprised in a range from 80 to 180°C, while the pressure is comprised between 15 and 100 bar.

9. The process according to claim 1, wherein in step b) said water introduced upstream the screw pump reacts with said organo-aluminum compound to form species containing -Al(OH)- groups.

10. The process according to claim 1, wherein said organo-aluminum compound is an aluminum alkyl compound of formula AlR₃, where R=alkyl radical C₁-C₁₂.

11. The process according to claim 10, wherein said alkyl aluminum compound is selected among triethylaluminum, triisobutylaluminum, tri-n-butylaluminum, tri-n-hexylaluminum, tri-n-octylaluminum.

12. The process according to claims 9-11, wherein said species containing -Al(OH)-groups precipitate on the rotor and stator surfaces of said screw pump forming a layer.

13. The process according to claim 1, wherein said polymeric solution in step b) is delivered by said screw pump at a delivery pressure from 50 to 100 bar.

14. The process according to claim 1, wherein said step for removing the unreacted monomers from the polymer is carried out by melt devolatilization.

15. The process according to claim 14, wherein said melt devolatilization is performed in a sequence of a first and a second volatilizer operating at a decreasing pressure.

## Patentansprüche

1. Lösungsverfahren zur Polymerisation von einem oder mehr α-Olefin(en) der Formel CH₂=CHR, worin R ein H oder ein C₁₋₁₂-Alkylrest ist, zur Herstellung eines im Reaktionsmedium löslichen Polymers, wobei das Verfahren Folgendes umfasst:
(a) Polymerisieren von einem oder mehr α-Olefin(en) in einer Lösungsphase in Anwesenheit einer Organoaluminiumverbindung und eines Katalysatorsystems, umfassend eine Übergangsmetallverbindung als Katalysatorkomponente zur Herstellung einer polymeren Lösung;
(b) Beaufschlagen mit Druck und Überführen mittels einer Schneckenpumpe der aus Schritt a) erhaltenen polymeren Lösung an einen sich anschließenden Schritt zum Entfernen der nicht zur Reaktionen gebrachten Monomere aus dem Polymer;
wobei das Verfahren **dadurch gekennzeichnet ist, dass** der polymeren Lösung an einem Einspeisungspunkt stromaufwärts von der Pumpe Wasser zugefügt wird, wobei das Molverhältnis von H₂O/Al zwischen 0,5 und 8,0 beträgt.

2. Verfahren nach Anspruch 1, worin das Molverhältnis von H₂O/Al zwischen 1,0 und 4,0 beträgt.

3. Verfahren nach den Ansprüchen 1 bis 2, worin das Katalysatorsystem in Schritt (a) ein Ziegler-Natta-Katalysator und/oder ein "Single-Site"-Katalysator ist.

4. Verfahren nach einem der Ansprüche 1 bis 3, worin die Polymerisation von Schritt a) in einem oder mehr kontinuierlich betriebenen Rührkesselreaktor(en) oder statischen Mischer-Reaktor(en) (SMR) durchgeführt wird.

5. Verfahren nach einem der Ansprüche 1 bis 4, worin das zu polymerisierende α-Olefin 1-Buten ist und der Polymerisationsschritt (a) im flüssigen Monomer durchgeführt wird.

6. Verfahren nach Anspruch 5, worin die Lösungspolymerisation von 1-Buten bei einer Temperatur durchgeführt wird, die im Bereich von 65 bis 85 °C liegt, während der Druck zwischen 8 und 40 bar beträgt.

7. Verfahren nach einem der Ansprüche 1 bis 4, worin das zu polymerisierende α-Olefin Propylen ist und die Polymerisation von Schritt (a) in Anwesenheit eines Polymerisationsmediums durchgeführt wird, das aus einem paraffinischen, isoparaffinischen, naphthenischen oder aromatischen KohlenwasserstoffLösungsmittel ausgewählt ist.

8. Verfahren nach Anspruch 7, worin die Lösungspolymerisation von Propylen bei einer Temperatur durchgeführt wird, die im Bereich von 80 bis 180 °C liegt, während der Druck zwischen 15 und 100 bar beträgt.

9. Verfahren nach Anspruch 1, worin das in Schritt b) stromaufwärts von der Schneckenpumpe eingeleitete Wasser mit der Organoaluminiumverbindung zur Bildung einer Spezies mit -Al(OH)-Cruppen reagiert.

10. Verfahren nach Anspruch 1, worin die Organoaluminiumverbindung eine Aluminium-Alkyl-Verbindung der Formel AlR₃ ist, worin R ein C₁- bis C₁₂₋Alkylrest ist.

11. Verfahren nach Anspruch 10, worin die Alkyl-Aluminum-Verbindung unter Triethylaluminium, Triisobutylaluminium, Tri-n-butylaluminium, Tri-n-hexylaluminium und Tri-n-octylaluminium ausgewählt ist.

12. Verfahren nach den Ansprüchen 9 bis 11, worin sich die Spezies mit -Al(OH)-Cruppen auf den Rotor- und Statoroberflächen der Schneckenpumpe niederschlägt und eine Schicht bildet.

13. Verfahren nach Anspruch 1, worin die polymere Lösung in Schritt b) von der Schneckenpumpe bei einem Förderdruck von 50 bis 100 bar gefördert wird.

14. Verfahren nach Anspruch 1, worin der Schritt zum Entfernen der nicht zur Reaktion gebrachten Monomere aus dem Polymer mittels Schmelzentgasung durchgeführt wird.

15. Verfahren nach Anspruch 14, worin die Schmelzentgasung der Reihe nach durchgeführt wird, wobei ein erster und ein zweiter Entgaser bei abnehmendem Druck arbeiten.

## Revendications

1. Procédé en solution pour la polymérisation d'une ou de plusieurs α-oléfines de formule CH₂=CHR, où R représente H ou un radical C₁₋₁₂-alkyle pour produire un polymère qui est soluble dans le milieu réactionnel, le procédé comprenant :
(a) la polymérisation en phase en solution d'une ou de plusieurs α-oléfines en présence d'un composé organique de l'aluminium et d'un système de catalyseur comprenant un composé de métal de transition comme composant catalyseur afin de produire une solution polymère ;
(b) pressurisation et transfert, au moyen d'une pompe à vis, de la solution polymère obtenue dans l'étape a) dans une étape consécutive pour éliminer les monomères qui n'ont pas réagi du polymère ;
le procédé étant **caractérisé en ce que** de l'eau est ajoutée à la solution polymère en un point d'alimentation en amont de la pompe, le rapport molaire H₂O/Al étant compris entre 0,5 et 8,0.

2. Procédé selon la revendication 1, dans lequel ledit rapport molaire H₂O/al est compris entre 1,0 et 4,0.

3. Procédé selon les revendications 1-2, dans lequel ledit système de catalyseur dans l'étape a) est un système de catalyseur de type Ziegler-Natta et/ou un catalyseur à site unique.

4. Procédé selon l'une quelconque des revendications 1-3, dans lequel la polymérisation dans l'étape a) est réalisée dans un ou plusieurs réacteur(s) agité(s) en continu ou réacteur(s) à mélangeur statique (static mixer reactors - SMR).

5. Procédé selon l'une quelconque des revendications 1-4, dans lequel l'α-oléfine à polymériser est le 1-butène et l'étape de polymérisation (a) est effectuée dans le monomère liquide.

6. Procédé selon la revendication 5, dans lequel la polymérisation en solution de 1-butène est effectuée à une température comprise dans la plage de 65 à 85°C, alors que la pression est comprise entre 8 et 40 bars.

7. Procédé selon l'une quelconque des revendications 1-4, dans lequel l'α-oléfine à polymériser est le propylène et la polymérisation de l'étape (a) est effectuée en présence d'un milieu de polymérisation choisi parmi un solvant hydrocarboné paraffinique, isoparaffinique, naphténique ou aromatique.

8. Procédé selon la revendication 7, dans lequel la polymérisation en solution de propylène est effectuée à une température comprise dans la plage de 80 à 180°C, alors que la pression est comprise entre 15 et 100 bars.

9. Procédé selon la revendication 1, dans lequel, dans l'étape b), ladite eau introduite en amont de la pompe à vis réagit avec le composé organique de l'aluminium pour former des substances contenant des groupes -Al(OH)-.

10. Procédé selon la revendication 1, dans lequel ledit composé organique de l'aluminium est un composé d'alkylaluminium de formule AlR₃ où R = radical C₁-C₁₂-alkyle.

11. Procédé selon la revendication 10, dans lequel ledit composé d'alkylaluminium est choisi parmi le triéthylaluminium, le triisobutylaluminium, le tri-n-butylaluminium, le tri-n-hexylaluminium, le tri-n-octylaluminium.

12. Procédé selon les revendications 9-11, dans lequel lesdites substances contenant des groupes -Al(OH)- précipitent sur les surfaces du rotor et du stator de ladite pompe à vis, en formant une couche.

13. Procédé selon la revendication 1, dans lequel ladite solution polymère dans l'étape b) est refoulée par ladite pompe à vis à une pression de refoulement de 50 à 100 bars.

14. Procédé selon la revendication 1, dans lequel ladite étape pour éliminer les monomères qui n'ont pas réagi du polymère est effectuée par dévolatilisation en masse fondue.

15. Procédé selon la revendication 14, dans lequel ladite dévolatilisation en masse fondue est réalisée dans une séquence d'un premier et d'un deuxième dispositif de volatilisation, exploités à une pression décroissante.
